# EUROPEAN PATENT APPLICATION

(11) **EP 4 227 638 A1**
(43) Date of publication of application: **16.08.2023**
(21) Application number: 21885805.8
(22) Date of filing: 30.09.2021
(51) Int. Cl.: G01B 11/26, G03F 7/20, G02F 1/1337

(54) **MEASUREMENT MECHANISM FOR ALIGNMENT FILM EXPOSURE DEVICE AND METHOD FOR ADJUSTING ALIGNMENT FILM EXPOSURE DEVICE**

(30) Priority: 30.10.2020 JP 2020182928
(71) Applicant: Phoenix Electric Co., Ltd., Himeji-shi, Hyogo 679-2122 (JP)
(72) Inventor: INOUE Tomohiko, Himeji-shi Hyogo 679-2122 (JP); YAMASHITA Kenichi, Himeji-shi Hyogo 679-2122 (JP); MATSUMOTO Hiromu, Himeji-shi Hyogo 679-2122 (JP); IKEDA Tomihiko, Himeji-shi Hyogo 679-2122 (JP)
(74) Representative: Horn Kleimann Waitzhofer Patentanwälte PartG mbB
(86) International application number: PCT/JP2021/036101
(87) International publication number: WO 2022/091686

(57) **Abstract**

It is intended to provide a measurement mechanism for efficiently measuring illuminance in an alignment film exposure device and a method of adjusting an alignment film exposure device for efficiently adjusting a polarizing element. The present measurement mechanism (100) is used in an alignment film exposure device (10) including a light source (12) and a polarizing element (14) that receives light emitted from the light source (12) and causes the light to transmit therethrough and be then incident on a work (X) disposed on an exposure surface (A). The measurement mechanism (100) includes an illuminometer (110) disposed on the exposure surface (A). The illuminometer (110) measures an exposure surface illuminance on the exposure surface (A), an extinction ratio, displacement of a polarizing axis in the polarizing element (14), and an emission angle.

## Description

### Field of the Invention

The present invention relates to a measurement mechanism for an alignment film exposure device mainly used for light exposure in manufacturing a liquid crystal panel and to a method of adjusting an alignment film exposure device.

### Background Art

When used for a display panel driven in a TN (Twisted Nematic) mode, a liquid crystal is encapsulated between a pair of glass substrates provided with transparent electrodes on the inner surfaces thereof. Here, applying voltage to the transparent electrodes is not enough to normally operate the liquid crystal. This is because liquid crystal molecules are in a loose arrangement.

In order to normally operate the liquid crystal in the TN mode, the liquid crystal molecules are required to be aligned in a predetermined direction and be raised in a predetermined direction as well. Specifically, the liquid crystal molecules are aligned in the predetermined direction, while being tilted at 3° or so with respect to the pair of glass substrates. The tilt angle is referred to as a pre-tilt angle.

Besides, regarding the pair of glass substrates capable of aligning the liquid crystal, one is disposed to be aligned with an X direction, while the other opposed to the one is disposed to be aligned with a Y direction perpendicular to the X direction (TN mode).

Thus, a liquid crystal alignment process is required for manufacturing a liquid crystal panel; a rubbing process of rubbing the surface of a glass substrate has been conventionally executed (e.g., Japan Laid-open Patent Application Publication No. 2007-17475). The rubbing process refers to a processing method of forming a film capable of aligning crystal liquid molecules in a predetermined direction by rubbing an organic polymer film disposed on a glass substrate with a shaggy cloth or so forth in the predetermined direction.

The TN mode with high-speed response has been made popular with prevalence of the rubbing process, whereby mass production of liquid crystal panels with stable performance has been realized at a low cost. As a result, liquid crystal monitors have been prevailed as display monitors for office automation equipment (e.g., personal computers) and monitors for game consoles.

However, the rubbing process has had the following drawbacks that may lead to deterioration in reliability: poor evenness, chances of occurrence of electrostatic destruction of a TFT (Thin-Film Transistor), and attaching of waste powder material produced in rubbing.

In addition, the pre-tilt angle achievable by the rubbing process is, as described above, 3° or so in the TN mode representative of a horizontally aligned liquid crystal mode; hence, it has been difficult to produce a display panel with a liquid crystal mode compatible with driving at low voltage and high-speed response.

In order to deal with the drawbacks of the rubbing process described above, an alignment film exposure device, capable of executing a photo-alignment process, has been proposed at present and a mercury lamp or an LED has been used as a light source for the alignment film exposure device.

However, the followings are required for executing a photo-alignment process with a light source: a measurement mechanism for efficiently measuring illuminance in an alignment film exposure device and a method of adjusting an alignment film exposure device for efficiently adjusting a polarizing element.

The present invention has been produced in view of the drawbacks described above. It is an object of the present invention to provide a measurement mechanism for efficiently measuring illuminance in an alignment film exposure device capable of executing a photo-alignment process at a low cost with a simple and convenient configuration instead of executing a rubbing process and to provide a method of adjusting an alignment film exposure device for efficiently adjusting a polarizing element.

### SUMMARY OF THE INVENTION

According to an aspect of the present invention, a measurement mechanism is provided. The measurement mechanism is used in an alignment film exposure device including a light source and a polarizing element that receives light emitted from the light source and causes the light to transmit therethrough and be then incident on a work disposed on an exposure surface. The measurement mechanism includes an illuminometer disposed on the exposure surface. The illuminometer measures an exposure surface illuminance on the exposure surface, an extinction ratio, displacement of a polarizing axis in the polarizing element, and an emission angle.

Preferably, in the measurement mechanism, the exposure surface illuminance is measured in a plurality of points by moving the illuminometer within the exposure surface.

Preferably, in the measurement mechanism, the extinction ratio is calculated by dividing f p-wave intensity by s-wave intensity, where the p-wave intensity is defined as a value of an illuminance of the light measured when the light transmits through a reference polarizing element disposed on a light source-side face of the illuminometer in one state of the reference polarizing element oriented in a direction approximately orthogonal to a direction of polarization by the polarizing element, whereas the s-wave intensity is defined as a value of the illuminance of the light measured when the light transmits through the reference polarizing element in another state of the reference polarizing element rotated by an angle of 90 degrees from the one state thereof made in measurement of the p-wave intensity.

Preferably, in the measurement mechanism, the displacement of the polarizing axis in the polarizing element is defined as displacement of the polarizing axis with respect to a predetermined polarizing direction; besides, the displacement of the polarizing axis in the polarizing element is checked by comparison between a reference illuminance, defined as a value of an illuminance of the light measured when the light transmits through a reference polarizing element disposed on a light source-side face of the illuminometer in a reference state of the reference polarizing element oriented in a predetermined direction, and each of values of the illuminance of the light measured when the reference polarizing element is rotated from the reference state thereof at angular intervals of a predetermined value.

Preferably, in the measurement mechanism, the illuminometer measures an illuminance a plurality of times in a position of intersection between the exposure surface and a center optical axis of each of a single or plurality of light source elements forming the light source by changing an angle of the illuminometer oriented toward the each of the single or plurality of light source elements; besides, a value of the angle at which the illuminance is measured as a maximum is defined as the emission angle.

According to another aspect of the present invention, a measurement mechanism is provided. The measurement mechanism is used in an alignment film exposure device including a light source and a polarizing element that receives light emitted from the light source and causes the light to transmit therethrough and be then incident on a work disposed on an exposure surface. The measurement mechanism includes a photometer that is disposed on the exposure surface and is moved in a scanning direction of the work so as to continuously measure an amount of light received thereby from the light source. The photometer generates pulse signals with a frequency depending on a magnitude of analog signals generated when the light is received by the photometer from the light source, and then calculates summation of the amounts of light received thereby from the light source in an entire period of the movement thereof based on the number of the pulse signals.

According to yet another aspect of the present invention, a method of adjusting an alignment film exposure device is provided. The alignment film exposure device includes a light source and a plurality of polarizing elements aligned in adjacent to each other. Each of the plurality of polarizing elements receives light emitted from the light source and causes the light to transmit therethrough and be then incident on a work disposed on an exposure surface. The method includes causing an illuminometer disposed on the exposure surface and a reference polarizing element disposed on a light source-side face of the illuminometer to receive the light transmitting through two polarizing elements aligned in adjacent to each other in the plurality of polarizing elements. Besides, the method includes adjusting a direction of polarization by each of the two polarizing elements with monitoring an illuminance indicated by the illuminometer.

### Advantageous Effects of Invention

In the measurement mechanism according to the present invention, the exposure surface illuminance on the exposure surface, the extinction ratio, the displacement of the polarizing axis in the polarizing element, and the emission angle can be measured by the illuminometer.

Besides, in the method of adjusting an alignment film exposure device according to the present invention, the direction of polarization by each of two polarizing elements can be adjusted by a single illuminometer.

Because of the above, it is made possible to provide a measurement mechanism for efficiently measuring illuminance in an alignment film exposure device and a method of adjusting an alignment film exposure device for efficiently adjusting a polarizing element.

### BRIEF DESCRIPTION OF THE DRAWINGS

Referring now to the attached drawings which form a part of this original disclosure:
FIG. 1 is a diagram showing an alignment film exposure device (10) to which the present invention is applied;
FIG. 2 is a diagram showing a measurement mechanism (100) to which the present invention is applied;
FIG. 3 is a diagram showing a state of the alignment film exposure device (10) in which the measurement mechanism (100) is disposed;
FIG. 4 is a diagram exemplifying measurement positions (Y) on an exposure surface (A), in which measurement is executed by the measurement mechanism (100);
FIG. 5 is a diagram showing an alternative configuration of the measurement mechanism (100) to which the present invention is applied;
FIG. 6 is a diagram according to modification 1 and shows a state of the alignment film exposure device (10) in which the measurement mechanism (100) is disposed;
FIG. 7 is a diagram showing a moving direction and a direction of polarization by a reference polarizing element (120);
FIG. 8 is a diagram showing the moving direction and the direction of polarization by the reference polarizing element (120);
FIG. 9 is a chart showing a relation between angle at which the reference polarizing element (120) is rotated (horizontal axis) and illuminance of light received by an illuminometer (110) (vertical axis);
FIG. 10 is a chart showing a relation between angle at which the reference polarizing element (120) is rotated (horizontal axis) and illuminance of light received by the illuminometer (110) (vertical axis);
FIG. 11 is a diagram according to modification 3 and shows a state of the alignment film exposure device (10) in which the measurement mechanism (100) is disposed;
FIG. 12 is a diagram showing a state of the measurement mechanism (100) receiving light transmitted from two polarizing elements (14a and 14b) aligned in adjacent to each other;
FIG. 13 is a diagram showing a state of the measurement mechanism (100) adjusting three polarizing elements (14a, 14b, and 14c);
FIG. 14 is a diagram according to modification 5 and shows the measurement mechanism (100) including a photometer (150);
FIG. 15 is a diagram showing a configuration of the photometer (150);
FIG. 16 is a diagram showing a condition that a light receiving surface of the illuminometer (110) and that of the reference polarizing element (120) are matched in center position with each other, whereby a loss of light occurs; and
FIG. 17 is a diagram showing a condition that the light receiving surface of the illuminometer (110) and that of the reference polarizing element (120) are displaced in center position from each other, whereby the loss of light is minimized.

### DETAILED DESCRIPTION OF EMBODIMENTS

### (Configuration of Alignment Film Exposure Device 10)

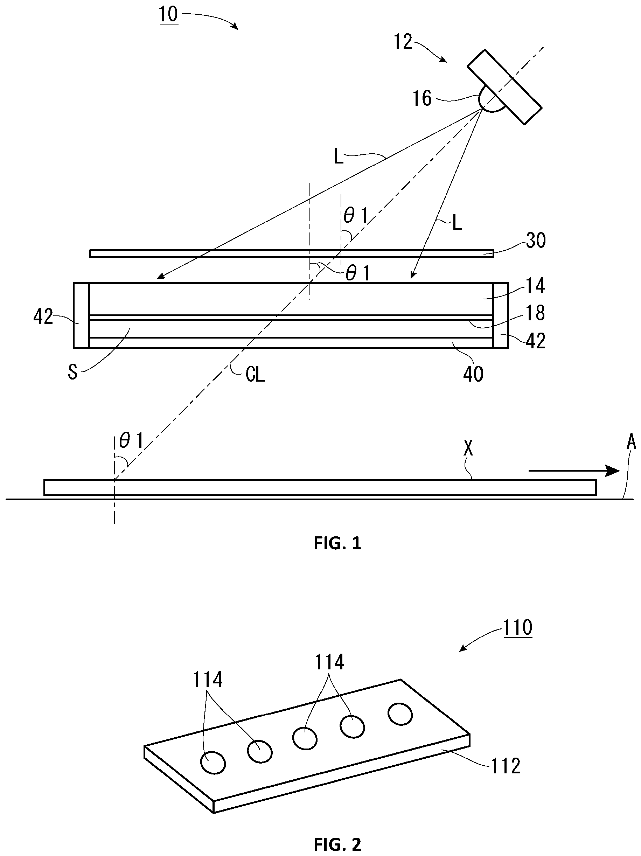

In advance of explaining a measurement mechanism 100 according to an exemplary embodiment to which the present invention is applied, an alignment film exposure device 10, in which the measurement mechanism 100 is used, will be hereinafter explained. As shown in FIG. 1, the alignment film exposure device 10 mainly includes a light source 12, a polarizing element 14, an optical filter 30, and a cover member 40. It should be noted that the optical filter 30 and the cover member 40 are not constituent elements indispensable for the alignment film exposure device 10.

The light source 12 is a member for emitting exposure light L toward an exposure surface A on which a work (exposure object) X is disposed. In the present exemplary embodiment, a plurality of LEDs (light-emitting diodes) 16 are used as the light source 12. The LEDs 16 are configured to emit the exposure light L so as to scan the work X moved on the exposure surface A in a predetermined direction; hence, the light source 12 is formed by the plural LEDs 16 disposed approximately in series in a direction perpendicular to the moving direction of the work X. Obviously, the alignment film exposure device 10 may be moved with respect to the work X in emission of the exposure light L; alternatively, both the work X and the alignment film exposure device 10 may be moved in emission of the exposure light L.

Besides, each of the LEDs 16 composing the light source 12 is disposed to tilt with respect to the work X (i.e., the exposure surface A) such that an optical axis CL thereof forms a first angle θ1 (i.e., an angle of incidence θ1) with respect to a normal to the work X. When an alignment film, formed by obliquely emitting light with lesser variation in angular component, is used for a liquid crystal panel, a stable pre-tilt angle and a stable alignment state can be achieved; hence, the liquid crystal panel can be implemented in an arbitrary alignment mode.

It should be noted that the constituent elements of the light source 12 are not limited to the LEDs 16; alternatively, for instance, at least one discharge lamp of a single lamp type or a multiple lamp type may be used as the light source 12.

The polarizing element 14 is an element for polarizing the light emitted from the light source 12 by enabling only light components vibrating in one direction to transmit therethrough. In the present exemplary embodiment, a wire grid polarizing element is used as the polarizing element 14. The wire grid polarizing element is obtained by forming a wire grid on one of the faces of a transparent substrate (glass substrate). In the present exemplary embodiment, a wire grid formed face 18 may be the light source 12-side face of the polarizing element 14 as one face thereof facing the light source 12, or alternatively, may be the other face thereof disposed on the opposite side of the light source 12. Besides, the polarizing element 14 is preferably arranged and set in parallel to the work X (the exposure surface A).

The optical filter 30 is arranged and set between the light source 12 and the polarizing element 14. The optical filter 30, provided with a wavelength selective film on the surface thereof, is a member that selectively allows rays of the light L emitted from the light source 12 to transmit therethrough only when the rays of the light L have a predetermined wavelength or greater. Besides, the optical filter 30 is preferably arranged and set in parallel to the work X (the exposure surface A) in a similar manner to the polarizing element 14. It should be noted that as long as conditions to be described are satisfied, the following filters are usable as the optical filter 30: a long-pass filter that allows rays of light with a predetermined wavelength or greater to transmit therethrough and a band-pass filter that allows rays of light with a wavelength falling in a predetermined range to transmit therethrough but blocks rays of light with a wavelength shorter or longer than the predetermined range from transmitting therethrough. Furthermore, the optical filter 30 may be arranged and set on the opposite side of the light source 12 from the polarizing element 14.

The cover member 40 is a plate material made of glass, for instance, and transmits therethrough the light L emitted from the light source 12. The cover member 40 is arranged and set approximately in parallel to the work X in a position opposed to the wire grid formed face 18 on the polarizing element 14. In other words, when the wire grid formed face 18 on the polarizing element 14 is disposed on the opposite side of the light source 12 as shown in FIG. 1, the cover member 40 is also arranged and set on the opposite side of the light source 12 from the polarizing element 14. Contrarily, when the wire grid formed face 18 on the polarizing element 14 is disposed on the same side as the light source 12 (not shown in the drawings), the cover member 40 is also arranged and set on the same side as the light source 12 from the polarizing element 14.

It should be noted that an antireflective process may not be executed for the surfaces (of both faces) of the cover member 40 by forming thereon an antireflective film or so forth; however, it is preferred to execute the antireflective process for either the surface of either face or the surfaces of both faces of the cover member 40 by forming thereon the antireflective film or so forth.

Besides, it is preferred to seal a space S produced between the cover member 40 and the wire grid formed face 18 on the polarizing element 14. For example, it can be assumed to seal the space S produced between the cover member 40 and the wire grid formed face 18 on the polarizing element 14 by a holding frame 42 provided for holding the circumferential edges of the cover member 40 and those of the polarizing element 14.

It should be noted that the term "seal" described above means closing the space S enough to prevent intrusion of a minute solid object (e.g., siloxane compound) and does not necessarily mean perfectly closing the space S.

Besides, it is preferred to use a wire grid of a so-called "reflective type" for the polarizing element 14. This is because when the wire grid of "reflective type" is used, there is a low possibility of occurrence of the following situation: The wire grid is heated by the light L emitted from the light source 12, whereby the sealed space S undesirably increases in temperature; consequently, the wire grid formed face 18 and so forth are damaged.

Furthermore, in order to cool the sealed space S, at least one of the constituent members of the space S including the cover member 40, the polarizing element 14, and the holding frame 42 may be cooled by a method of forced air cooling or water cooling.

### (Configuration of Measurement Mechanism 100)

Next, the configuration of the measurement mechanism 100 will be explained. The measurement mechanism 100 according to the present exemplary embodiment includes an illuminometer 110 disposed on the exposure surface A.

The illuminometer 110 according to the present exemplary embodiment is configured to measure exposure surface illuminance. Specifically, as shown in FIG. 2, the illuminometer 110 is composed of an illuminometer body 112 and a plurality of illuminance measuring elements 114 that are mounted to the upper face of the illuminometer body 112 so as to be disposed in line. Besides, the height from the exposure surface A to the surface of each illuminance measuring element 114 is preferably set to be equal to the thickness of the work X (i.e., the height from the exposure surface A to the surface of the work X).

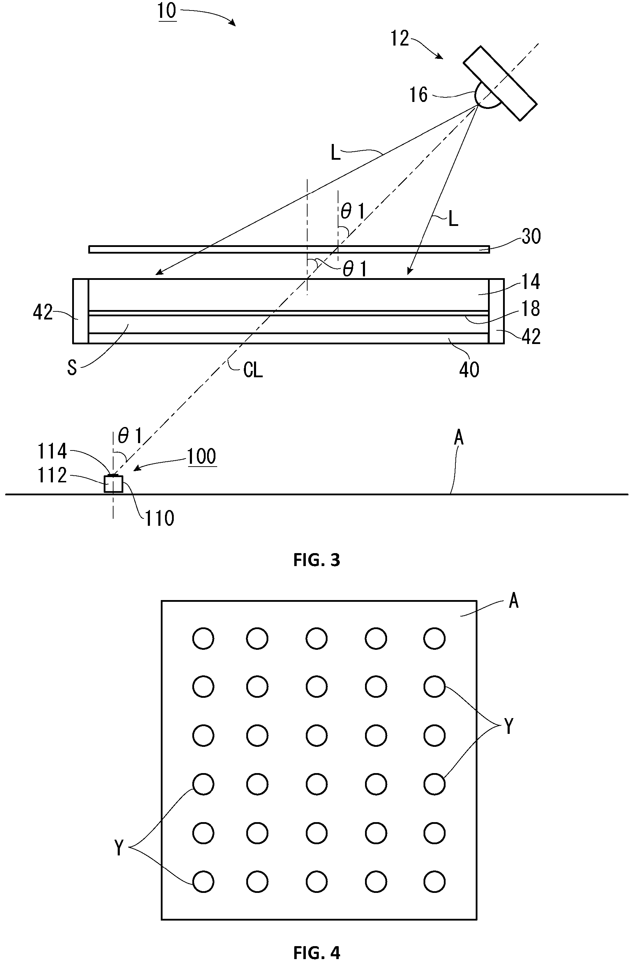

As shown in FIG. 3, the illuminometer 110 is disposed on the exposure surface A (preferably, the plural illuminance measuring elements 114 are herein disposed to be aligned in a direction approximately orthogonal to the moving direction of the light source 12 with respect to the exposure surface A). Thereafter, the illuminometer 110 is moved in the moving direction of the light source 12 within the exposure surface A, and simultaneously, measures illuminance by the illuminance measuring elements 114 at intervals of predetermined moving distance. Accordingly, as shown in FIG. 4, the illuminance of the light emitted from the light source 12 can be measured on the exposure surface A in measurement positions Y aligned on a grid. The light source 12 may be moved relative to the exposure surface A on an as-needed basis.

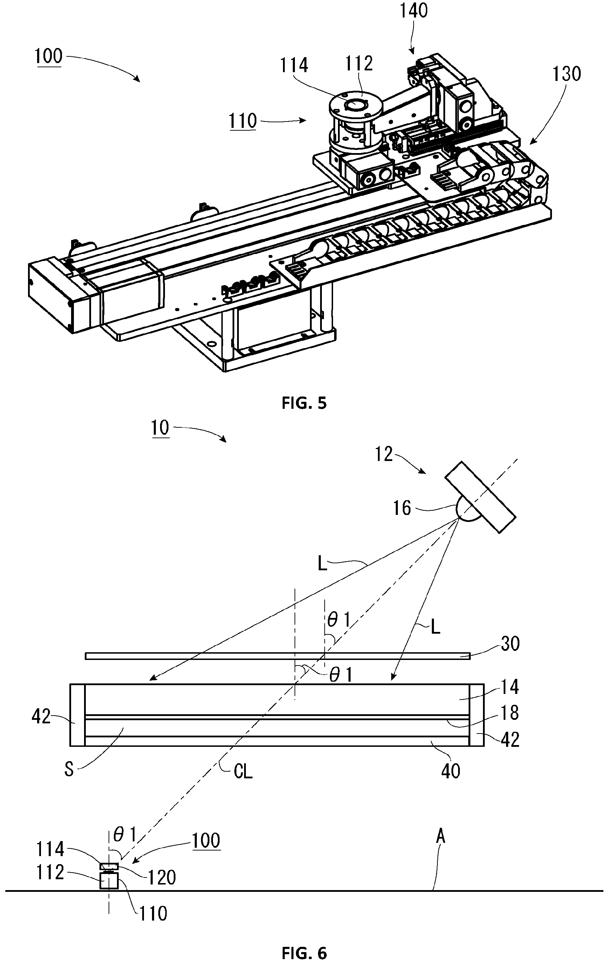

It should be noted that the number of the illuminance measuring elements 114 mounted to the upper face of the illuminometer body 112 may be singular as configured in the measurement mechanism 100 shown in FIG. 5. The measurement mechanism 100 includes not only the illuminometer 110 but also an illuminometer moving mechanism 130 for moving the illuminometer 110 straight and an illuminometer angle setting mechanism 140 capable of setting at what angle the illuminometer 110 is oriented toward the light source 12.

When the number of the illuminance measuring elements 114 is singular, the illuminance of the light emitted from the light source 12 can be measured on the exposure surface Ain the measurement positions Y aligned on a grid not only by moving the illuminometer 110 in the moving direction of the light source 12 within the exposure surface A as described above but also by, for instance, changing the orientation of the measurement mechanism 100 and then moving the measurement mechanism 100 in a direction orthogonal to the moving direction of the light source 12 as well. Obviously, by moving the single illuminometer 110 in the moving direction of the light source 12 within the exposure surface A, the illuminance of the light emitted from the light source 12 can be measured on the exposure surface A in the measurement positions Y aligned in line along the moving direction of the light source 12.

### Modification 1

Alternatively, the measurement mechanism 100 may measure an extinction ratio instead of, or in addition to, the exposure surface illuminance described above. In this case, as shown in FIG. 6, the measurement mechanism 100 includes not only the illuminometer 110 but also a reference polarizing element 120.

The reference polarizing element 120 refers to a type of polarizing element characterized by substantially allowing rays of light polarized in a specific direction to pass therethrough but almost preventing rays of light polarized in a direction perpendicular to the specific direction from passing therethrough.

In calculation of "extinction ratio", the reference polarizing element 120 is disposed on the light source 12-side face of the illuminometer 110; thereafter, the illuminance of the light emitted from the light source 12 is measured by the illuminance measuring elements 114 in the following procedure.

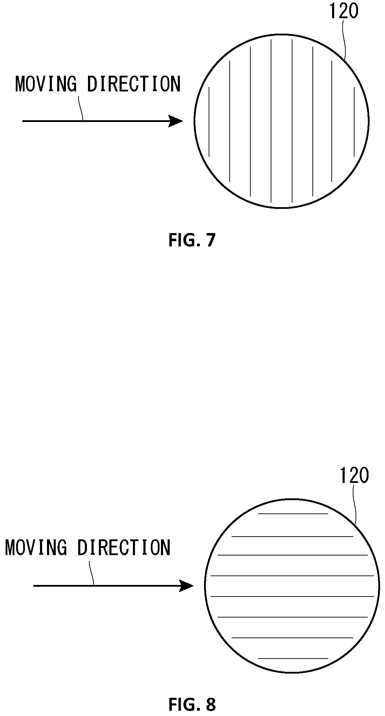

In the initial measurement, as shown in FIG. 7, while the reference polarizing element 120 is kept oriented in a direction approximately orthogonal to the direction of polarization by the polarizing elements 14, the illuminometer 110 receives light transmitting through the reference polarizing element 120 kept in this state; then, a value of the illuminance of the light thus received by the illuminometer 110 is measured as p-wave intensity. Thereafter, as shown in FIG. 8, while the reference polarizing element 120 is rotated by 90° from the state thereof made in measurement of the p-wave intensity (in this case, the direction of a polarizing axis is changed into a direction orthogonal to the direction of polarization by the polarizing element 14), the illuminometer 110 receives light transmitting through the reference polarizing element 120 thus rotated by 90°; then, a value of the illuminance of the light thus received by the illuminometer 110 is measured as s-wave intensity.

The extinction ratio can be calculated by dividing the value thus obtained as the p-wave intensity by the value thus obtained as the s-wave intensity.

It should be noted that the extinction ratio may be measured in only a single position on the exposure surface A (e.g., the middle point on the exposure surface A), or alternatively, in a plurality of positions on the exposure surface A. In this case, the light source 12 may be moved relative to the exposure surface A on an as-needed basis.

### Modification 2

Yet alternatively, the measurement mechanism 100 may measure displacement of the polarizing axis in the polarizing element 14. In modification 2 as well, the measurement mechanism 100 includes not only the illuminometer 110 but also the reference polarizing element 120 (see FIG. 6) in a similar manner to the modification 1 described above.

The term "displacement of the polarizing axis in the polarizing element 14" herein refers to displacement of the polarizing axis with respect to a predetermined polarizing direction. First, in order to check whether or not displacement of the polarizing axis occurs, the reference polarizing element 120 is disposed on the light source 12-side face of the illuminometer 110.

Then, the reference polarizing element 120 is set in a reference state defined as a state of the reference polarizing element 120 oriented in a predetermined direction (e.g., a direction approximately orthogonal to the direction of polarization by the polarizing element 14. A reference illuminance is herein measured as a value of the illuminance of the light transmitting through the reference polarizing element 120. Thereafter, the reference polarizing element 120 is rotated at angular intervals of a predetermined value from the reference state, while in parallel to the exposure surface A. Values of the illuminance are measured when the reference polarizing elements 120 is rotated at the angular intervals and are compared with the reference illuminance. The displacement of the polarizing axis in the polarizing element 14 is thus checked by the comparison.

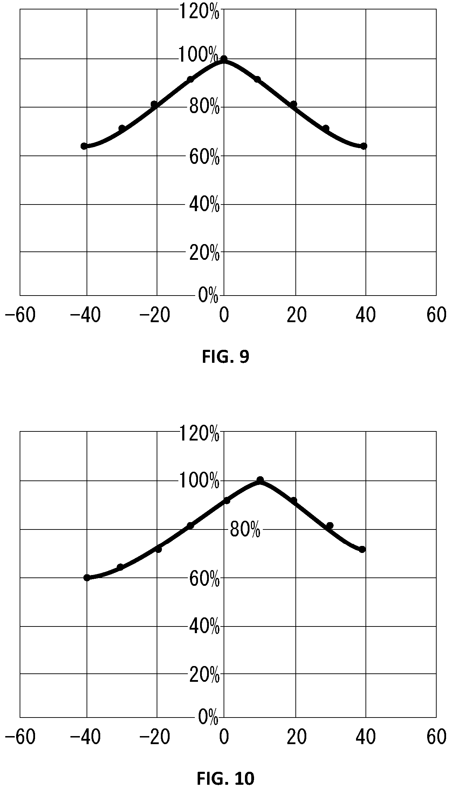

For example, it is assumed that the illuminance is obtained as shown in FIG. 9 when the reference polarizing element 120 is rotated clockwise and counterclockwise from the reference state at angular intervals of a redetermined value (angular intervals of 10°) in a view of looking the exposure surface A from above. In this case, it can be concluded that displacement of the polarizing axis in the polarizing element 14 is not caused (the polarizing axis is oriented to be matched with a direction approximately orthogonal to the moving direction of the light source 12 relative to the illuminometer 110). By contrast, it is assumed that the illuminance is obtained as shown in FIG. 10. In this case, it can be concluded that the polarizing axis is displaced clockwise by 10° from the direction approximately orthogonal to the moving direction of the light source 12 relative to the illuminometer 110 in the view of looking the exposure surface A from above.

It should be noted that the displacement of the polarizing axis may be measured in only a single position on the exposure surface A (e.g., the middle point on the exposure surface A), or alternatively, in a plurality of positions on the exposure surface A. In this case, the light source 12 may be moved relative to the exposure surface A on an as-needed basis.

### Modification 3

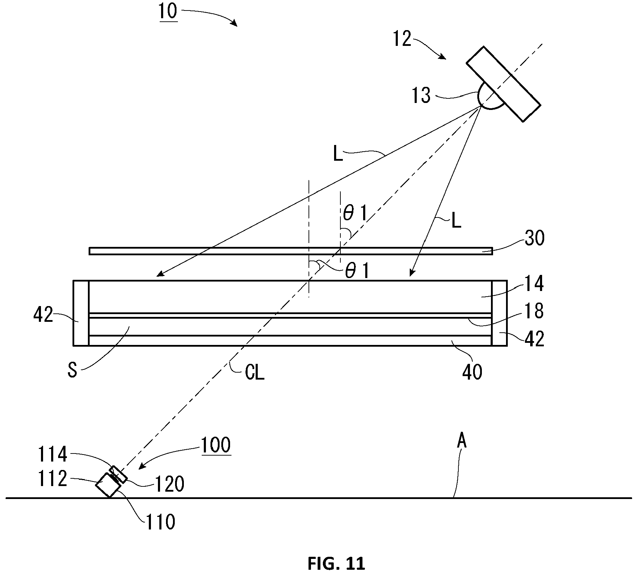

Still alternatively, the measurement mechanism 100 may measure an emission angle. As shown in FIG. 11, in modification 3 as well, the measurement mechanism 100 includes not only the illuminometer 110 but also the reference polarizing element 120 in a similar manner to the modification 1 described above; however, the reference polarizing element 120 is not a constituent element indispensable for the modification 3.

In forming a pre-tilt angle as a characteristic of a photo-alignment film, the emission angle serves as an important element for making the pre-tilt angle stable and large. The emission angle depends on an angle at which the light source 12 is fixed with respect to the exposure surface A.

The emission angle is measured in the following procedure. First, the illuminometer 110 measures the illuminance in a position of intersection between the exposure surface A and the center optical axis of each of a single or plurality of light source elements 13 composing the light source 12. The light source 12 is herein composed of a plurality of light source elements 13. When the light source 12 is composed of a large number of LEDs, for instance, a plurality of LEDs, included in the large number of LEDs, are collectively defined as a unit "light source element 13". On the other hand, when the light source 12 is composed of a plurality of discharge lamps, the discharge lamps correspond to the light source elements 13 on a one-to-one basis.

The illuminometer 110 herein measures the illuminance a plurality of times by changing the angle of the illuminometer 110 oriented toward the light source elements 13 with use of, for instance, the illuminometer angle setting mechanism 140 shown in FIG. 5 in a similar manner to the above. As a result, a value of the angle at which the illuminance is measured as a maximum is defined as the emission angle of the light source element 13 with respect to the exposure surface A.

It should be noted that the emission angle described above may be measured in only a single position on the exposure surface A (e.g., the middle point on the exposure surface A), or alternatively, in a plurality of positions on the exposure surface A. In this case, the light source 12 may be moved relative to the exposure surface Aon an as-needed basis.

### Modification 4

Further alternatively, the measurement mechanism 100 is usable for adjusting the position of the polarizing element 14 as well. When the work X is large in size, the light source 12 is enlarged in area accordingly. For example, when the alignment film exposure device 10 is of a type that the light source 12 is moved (for scanning) with respect to the work X disposed on the exposure surface A, the light source 12 is configured to have an area elongated in a direction orthogonal to the moving direction of the light source 12.

At this time, the light source 12 can be enlarged in area by aligning a required number of the light source elements 13 composing the light source 12; by contrast, when a plurality of polarizing elements 14a and 14b are used for coping with the light source 12 with large area, the polarizing elements 14a and 14b are required to be adjusted such that the polarizing directions thereof are matched with each other.

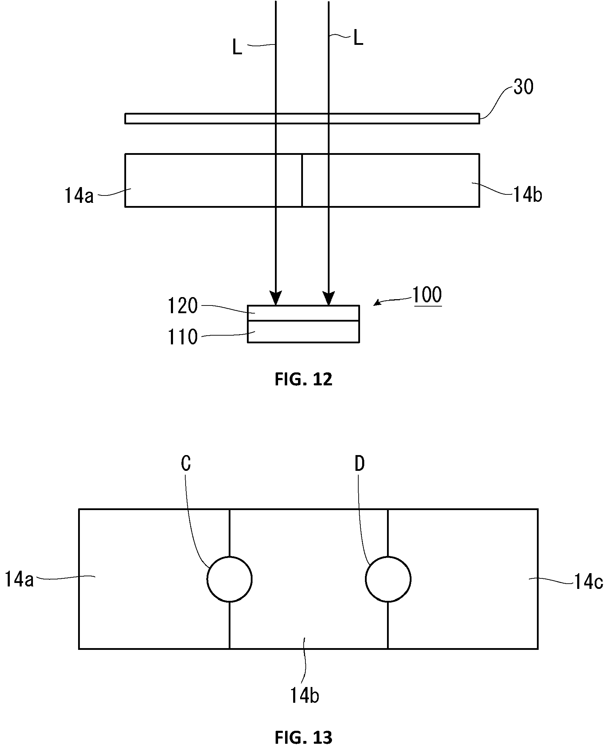

For example, as shown in FIG. 12, the measurement mechanism 100 is composed of the illuminometer 110 and the reference polarizing element 120 and receives the light transmitting through the two polarizing element 14a and 14b aligned in adjacent to each other by the reference polarizing element 120 and the illuminometer 110.

At this time, the direction of polarization by each of the two polarizing elements 14a and 14b is adjusted with monitoring the illuminance indicated by the illuminometer 110. Thus, adjustment in direction of polarization by each polarizing element 14a, 14b is enabled.

Specifically, a procedure of adjusting three polarizing elements 14a, 14b, and 14c will be exemplified. First, as shown in FIG. 13, the measurement mechanism 100 is disposed in a position corresponding to a boundary C between the first and second polarizing elements 14a and 14b. Under the condition, the illuminance of light transmitting through the first and second polarizing elements 14a and 14b (i.e., the illuminance of polarized light) is measured.

Then, only the second polarizing element 14b is moved for adjustment to maximize the illuminance of the light received by the measurement mechanism 100. Thereafter, only the first polarizing element 14a is moved, in turn, for adjustment to maximize the illuminance of the light received by the measurement mechanism 100. Accordingly, the first and second polarizing elements 14a and 14b can be adjusted such that the polarizing directions thereof are made optical, while maintained in relation with each other.

Subsequently, the measurement mechanism 100 is disposed in a position corresponding to a boundary D between the second and third polarizing elements 14b and 14c; then, only the third polarizing element 14c is moved for adjustment to maximize the illuminance of the light received by the measurement mechanism 100.

Based on the above, the first, second, and third polarizing elements 14a, 14b, and 14c can be adjusted such that the polarizing directions thereof are made optical, while maintained in relation with each other.

### Modification 5

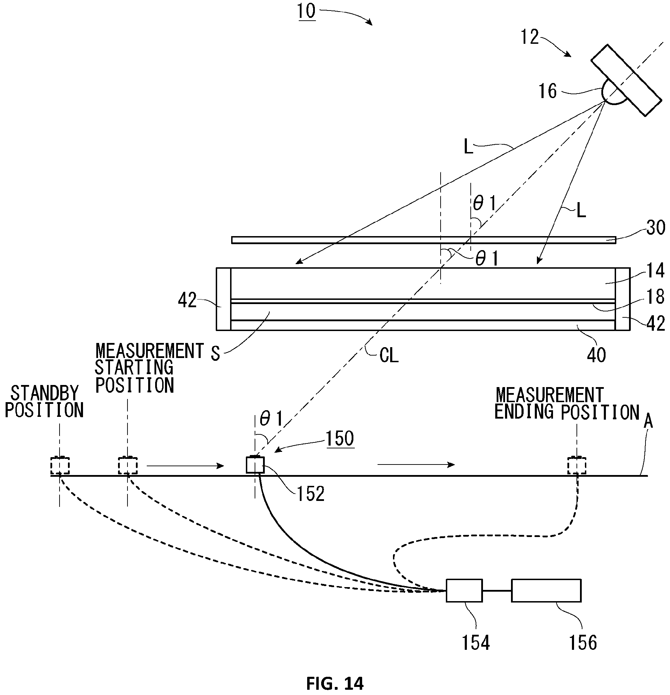

Still yet alternatively, the measurement mechanism 100 may measure the amount of the light emitted from the light source 12. In this case, as shown in FIG. 14, the measurement mechanism 100 includes a photometer 150 instead of the illuminometer 110.

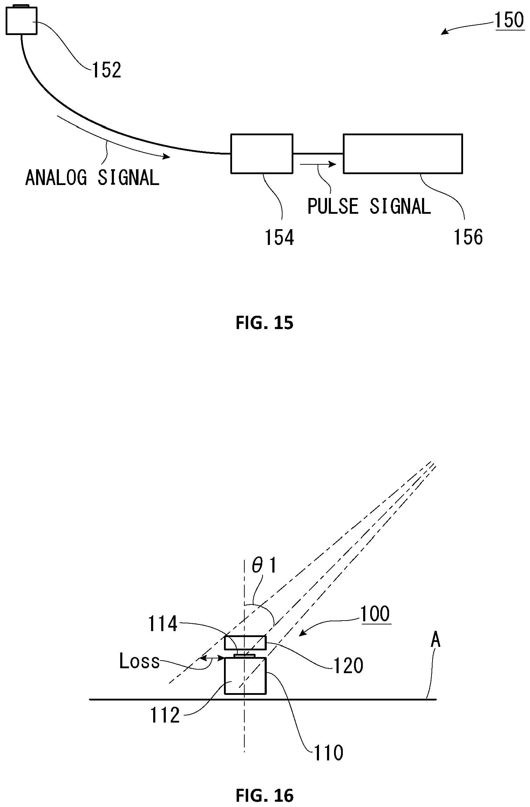

As shown in FIG. 15, the photometer 150 includes an illuminance sensor 152, a converter 154, and a summation display device 156.

The illuminance sensor 152 receives the light emitted from the light source 12 and externally outputs analog signals (e.g., voltage) depending on the magnitude of the illuminance of the light. For example, a phototransistor is used as the illuminance sensor 152.

The converter 154 generates pulse signals at a frequency depending on the magnitude of the analog signals transmitted thereto from the illuminance sensor 152 and externally transmits the pulse signals.

The summation display device 156 receives the pulse signals transmitted thereto from the converter 154, calculates the amount of light based on "a relational expression between the frequency of pulse signals and the amount of light" that has been set preliminarily, and displays the value of the amount of light on a display screen 158. Besides, the summation display device 156 is configured to be capable of calculating a sum of the amounts of light measured by the illuminance sensor 152 within a predetermined period of time.

Referring back to FIG. 14, the photometer 150 configured as described above is used for measuring the amount of the light emitted from the light source 12 onto the exposure surface A as follows.

The light source 12 is turned on; then, the illuminance sensor 152 is moved from a standby position to a measurement starting position. The illuminance sensor 152 has a sensing position set to be matched with the surface position of the work W located slightly closer to the light source 12 than the exposure surface A.

Thereafter, the illuminance sensor 152 is horizontally moved in a scanning direction from the measurement starting position to a measurement ending position. Meanwhile, the illuminance sensor 152 is preferably moved at a constant speed.

During scanning, the illuminance sensor 152 continuously transmits analog signals depending on the magnitude of the illuminance of the light received from the light source 12, whereas the converter 154 receives the consecutive analog signals, and in turn, continuously transmits pulse signals with a frequency depending on the magnitude of the analog signals.

Consequently, the summation display device 156 executes summation of the number of pulse signals transmitted during scanning, whereby it is made possible to calculate the summation of the amounts of light received by the illuminance sensor 152 during scanning based on the summation of the number of pulse signals.

It is difficult to find subtle change in analog signals, because the analog signals are likely to contain noise are not good in accuracy; however, the analog signals are converted into the pulse signals as described above, whereby the amount of light can be herein accurately measured even by the light source 12 using the LEDs 16 with a relatively small emission amount.

Furthermore, what is important in an exposure work for an exposure object (work X) is not at what illuminance the work X can be illuminated but what amount of energy (i.e., the amount of light) the work X can be given from the light source 12. Because of this, the photometer 150 in modification 5 can more accurately measure the amount of energy (i.e., the amount of light) given to the work X during scanning.

### Modification 6

It should be noted that, albeit the following is true of all the modifications using the reference polarizing element 120, when the illuminometer 110 receives the light transmitting through the reference polarizing element 120 and measures the illuminance thereof, the light emitted from the light source 12 is incident at the first angle θ1 on the light receiving surface of the illuminometer 110 and that of the reference polarizing element 120. Because of this, when the light receiving surface of the illuminometer 110 and that of the reference polarizing element 120 are matched in center position with each other in the view of looking the exposure surface A from above, the light emitted from the light source 12 is not received in part (i.e., loss of light occurs) as shown in FIG. 16.

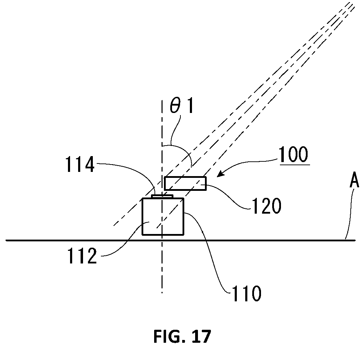

In consideration with this, the light receiving surface of the reference polarizing element 120 is displaced in center position from that of the illuminometer 110 in advance in the view of looking the exposure surface A from above. Specifically, as shown in FIG. 17, the light receiving surface of the illuminometer 110 and that of the reference polarizing element 120 are displaced in center position from each other in advance such that the optical axis CL from the light source 12 passes through the center of the light receiving surface of the illuminometer 110 and that of the light receiving surface of the reference polarizing element 120, whereby the light emitted from the light source 12 can be minimized in unreceived amount (loss of light).

It should be understood that the embodiment herein disclosed is illustrative only and is not restrictive in all aspects. It is intended that the scope of the present invention is indicated by the appended claims rather than the explanation described above and encompasses all the changes that come within the meaning and the range of equivalents of the appended claims.

### REFERENCE SIGNS LIST

10...Alignment film exposure device, 12...Light source, 13...Light source element, 14...Polarizing element, 16... LED, 18...Wire grid formed face, 30...Optical filter, 40... Cover member, 42...Holding frame, 100...Measurement mechanism, 110...Illuminometer, 112...Illuminometer body, 114... Illuminance measuring element, 120...Reference polarizing element, 130... Illuminometer moving mechanism, 140...Illuminometer angle setting mechanism, 150...Photometer, 152...Illuminance sensor, 154...Converter, 156...Summation display device, X...Work (exposure object), Y...Meaurement position, A... Exposure surface, L...Exposure light, CL...Optical axis (of LED 16), θ1...First angle, S...Space (between cover member 40 and wire grid formed face 18)

## Claims

1. A measurement mechanism used in an alignment film exposure device including a light source and a polarizing element, the polarizing element receiving light emitted from the light source, the polarizing element causing the light to transmit therethrough and be then incident on a work disposed on an exposure surface, the measurement mechanism comprising:
an illuminometer disposed on the exposure surface, wherein
the illuminometer measures an exposure surface illuminance on the exposure surface, an extinction ratio, displacement of a polarizing axis in the polarizing element, and an emission angle.

2. The measurement mechanism according to claim 1, wherein the exposure surface illuminance is measured in a plurality of points by moving the illuminometer within the exposure surface.

3. The measurement mechanism according to claim 1, wherein the extinction ratio is calculated by dividing p-wave intensity by s-wave intensity, the p-wave intensity defined as a value of an illuminance of the light measured when the light transmits through a reference polarizing element disposed on a light source-side face of the illuminometer in one state of the reference polarizing element oriented in a direction approximately orthogonal to a direction of polarization by the polarizing element, the s-wave intensity defined as a value of the illuminance of the light measured when the light transmits through the reference polarizing element in another state of the reference polarizing element rotated by an angle of 90 degrees from the one state thereof made in measurement of the p-wave intensity.

4. The measurement mechanism according to claim 1, wherein
the displacement of the polarizing axis in the polarizing element is defined as displacement of the polarizing axis with respect to a predetermined polarizing direction, and
the displacement of the polarizing axis in the polarizing element is checked by comparison between a reference illuminance defined as a value of an illuminance of the light measured when the light transmits through a reference polarizing element disposed on a light source-side face of the illuminometer in a reference state of the reference polarizing element oriented in a predetermined direction and each of values of the illuminance of the light measured when the reference polarizing element is rotated from the reference state thereof at angular intervals of a predetermined value.

5. The measurement mechanism according to claim 1, wherein
the illuminometer measures an illuminance a plurality of times in a position of intersection between the exposure surface and a center optical axis of each of a single or plurality of light source elements forming the light source by changing an angle of the illuminometer oriented toward the each of the single or plurality of light source elements, and
a value of the angle at which the illuminance is measured as a maximum is defined as the emission angle.

6. A measurement mechanism used in an alignment film exposure device including a light source and a polarizing element, the polarizing element receiving light emitted from the light source, the polarizing element causing the light to transmit therethrough and be then incident on a work disposed on an exposure surface, the measurement mechanism comprising:
a photometer disposed on the exposure surface, the photometer moved in a scanning direction of the work so as to continuously measure an amount of light received thereby from the light source, wherein
the photometer generates pulse signals with a frequency depending on a magnitude of analog signals generated when the light is received by the photometer from the light source, the photometer calculating summation of the amounts of light received thereby from the light source in an entire period of the movement thereof based on the number of the pulse signals.

7. A method of adjusting an alignment film exposure device, the alignment film exposure device including a light source and a plurality of polarizing elements aligned in adjacent to each other, each of the plurality of polarizing elements receiving light emitted from the light source, the each of the plurality of polarizing elements causing the light to transmit therethrough and be then incident on a work disposed on an exposure surface, the method comprising:
causing an illuminometer disposed on the exposure surface and a reference polarizing element disposed on a light source-side face of the illuminometer to receive the light transmitting through two polarizing elements aligned in adjacent to each other in the plurality of polarizing elements; and
adjusting a direction of polarization by each of the two polarizing elements with monitoring an illuminance indicated by the illuminometer.
